# FASCICULE DE BREVET EUROPEEN

(11) **EP 4 356 569 B1**
(45) Date de publication et mention de la délivrance du brevet: **30.10.2024**
(21) Numéro de dépôt: 23733670.6
(22) Date de dépôt: 13.06.2023
(51) Int. Cl.: H04L 12/403, G01D 21/00, H04L 41/0853, H04L 41/12

(54) **RÉSEAU DE CAPTEURS LINÉAIRES À AUTO-DÉCOUVERTE**
ANORDNUNG LINEARER SENSOREN MIT SELBSTERKENNUNG
ARRAY OF LINEAR SENSORS WITH SELF-DISCOVERY

(30) Priorité: 16.06.2022 FR 2205912
(43) Date de publication de la demande: 24.04.2024
(73) Titulaire: TTK, 75008 Paris (FR)
(72) Inventeur: GAUTIER, Olivier, 75006 PARIS (FR); GILLOT, Olivier, 75017 PARIS (FR)
(74) Mandataire: IPAZ
(86) Numéro de dépôt international: PCT/EP2023/065854
(87) Numéro de publication internationale: WO 2023/242219

(56) Documents cités:
- CN-A- 113 904 893
- US-A1- 2005 278 566
- US-A1- 2008 155 073

## Description

### Domaine technique

La présente invention concerne un procédé d'auto découverte d'un réseau de capteurs linéaires. Elle concerne aussi un capteur linéaire permettant l'auto découverte du réseau de capteurs linéaires.

### Etat de la technique antérieure

Pour détecter des fuites de liquide, sur de grandes longueurs telles que des oléoducs ou des conduites d'eau ou sur de grandes surfaces telles que des locaux industriels ou des salles informatiques, il est connu d'installer des capteurs linéaires connectés entre en eux en série pour former une ligne de détection.

Dans une telle ligne de détection, chaque capteur linéaire comprend une partie allongée qui inclut sur tout ou partie de sa longueur un moyen sensible au(x) liquide(s) à détecter. Les capteurs linéaires comprennent aussi dans leur partie allongée un bus de communication, lesquels sont connectés entre eux pour former un bus d'interrogation parcourant toute la longueur de la ligne de détection. L'extrémité de la ligne de détection est connectée avec une centrale.

Lors des interrogations de la part de la centrale, les capteurs linéaires répondent l'un après l'autre dans l'ordre de leurs connexions : le premier intercepte l'interrogation et y répond, puis se court-circuite lui-même pour que le prochain signal parvienne jusqu'au détecteur linéaire suivant ; et ainsi de suite jusqu'au bout de la chaîne.

Actuellement, la centrale identifie les capteurs linéaires par ordre chronologique de leurs réponses, et en déduit la topologie des capteurs linéaires, qu'elle stocke dans sa mémoire.

Dans la nouvelle technologie, les capteurs linéaires sont plus intelligents et leurs réponses sont enrichies par de nouvelles données.

Le but de la présente invention est de permettre au réseau de faire une auto découverte de celui-ci sans intervention de l'utilisateur.

Un autre but de la présente invention est de rendre le réseau tolérant aux changements de configuration qui peuvent être effectués en cours d'exploitation de manière imprévue ou non signalés.

La demande de brevet US 2005/278566 A1 décrit un procédé pour déterminer les positions de modules d'élaboration interconnectés d'un système de serveurs de fichiers dans une topologie linéaire, le procédé impliquant la détermination de la position d'un module désactivé, en se fondant sur des réponses reçues de modules non-déactivés à une interrogation de la part d'un noeud central.

La demande de brevet US 2008/155073 A1 divulgue un procédé d'auto-découverte et d'auto-énumération pour des téléphones IP connectés en chaîne dans un système, impliquant l'identification de ports des appareils interconnectés de manière sérielle pour ensuite identifier et énumérer les appareils eux-mêmes.

### Exposé de l'invention

Cet objectif est atteint avec un procédé d'auto découverte d'un réseau de capteurs linéaires, le réseau comprenant une centrale et une pluralité de capteurs linéaires comprenant chacun une première extrémité et une deuxième extrémité et qui sont connectés entre eux pour former une ligne de détection, laquelle est connectée à ladite centrale par au moins une extrémité de ladite ligne de détection, le réseau comprenant également au moins un accessoire, ledit accessoire comprenant au moins une sortie permettant de connecter un capteur linéaire via une des extrémités dudit capteur linéaire.

Selon l'invention, chaque capteur linéaire et/ou accessoire est caractérisé par un identifiant unique et en ce que le procédé comprend au moins les étapes suivantes :
- pour chaque capteur linéaire et/ou accessoire :
   - identification d'au moins un capteur linéaire situé en amont et/ou en aval du capteur linéaire et/ou de l'accessoire, l'au moins un capteur linéaire en amont et/ou en aval étant considéré comme identifié si l'une de ses extrémités est connecté à une des extrémités dudit capteur linéaire et/ou à l'au moins une sortie de l'accessoire,
   - envoi d'au moins une requête locale à l'au moins un capteur linéaire identifié par ledit capteur linéaire et/ou par l'accessoire,
   - envoi d'au moins une requête générale par la centrale à la pluralité de capteurs linéaires et/ou d'accessoires du réseau,
   - réception d'au moins une réponse à l'au moins une requête locale par ledit capteur linéaire et/ou l'accessoire, la réponse étant composée de l'identifiant unique de l'au moins un capteur linéaire identifié par ledit capteur linéaire et/ou l'accessoire,
   - envoi d'au moins une réponse à la requête générale par ledit capteur linéaire et/ou par l'accessoire, la réponse à l'au moins une requête générale envoyée par le capteur linéaire comprenant l'identifiant unique de l'au moins un capteur linéaire identifié par ledit capteur linéaire ainsi que l'identifiant unique dudit capteur linéaire, et/ou, la réponse à l'au moins une requête générale envoyée par l'accessoire comprenant l'identifiant unique de l'au moins un capteur linéaire identifié par ledit accessoire ainsi que l'identifiant unique dudit accessoire,
- traitement de l'au moins une réponse à la requête générale reçue de chaque capteur linéaire et/ou de chaque accessoire par la centrale permettant de reconstituer la topologie logique du réseau en fonction des identifiants uniques reçus.

Un des avantages du procédé selon l'invention est de permettre à la centrale de définir combien de capteurs linéaires et d'accessoires se trouvent dans le réseau et où se situe chaque capteur linéaire et chaque accessoire dans le réseau. La centrale permet alors de reconstituer la topologie logique de l'ensemble du réseau de capteurs linéaires en fonction des identifiants uniques reçus.

Avantageusement, l'accessoire peut correspondre à une dérivation et/ou un bouchon et/ou un câble neutre.

On entend par « dérivation », un élément qui permet l'ajout d'au moins un deuxième élément, typiquement un capteur linéaire.

On entend par « bouchon », un élément de fin de ligne indiquant la fin d'un câblage en série de capteurs linéaires afin de faire la distinction avec une rupture ou discontinuité de capteur linéaire.

On entend par « câble neutre », un câble permettant de relier deux capteurs/dérivations distants sans ajout de fonctionnalité.

On entend par « élément », soit une dérivation, soit un bouchon, soit un câble neutre. Les accessoires ne sont pas limités à la liste précédemment décrite.

Plusieurs types de dérivation existent comme par exemple une dérivation droite, une dérivation de bouclage et/ou une dérivation de longueur.

On entend par « dérivation droite », une dérivation qui permet l'ajout en dérivation de capteurs linéaires et accessoires en série sans retour.

On entend par « dérivation de bouclage », une dérivation qui permet l'ajout en dérivation de boucle de capteurs linéaires et/ou accessoires (câblage avec retour à la dérivation).

On entend par « dérivation de longueur », une dérivation qui permet l'ajout en dérivation d'un capteur linéaire de longueur non prédéfinie, en série sans retour. Cette accessoire permet d'intégrer dans le système des capteurs linéaires de longueur non définie d'avance. La dérivation mesure alors la longueur du capteur linéaire. La dérivation renvoie l'information à la centrale.

Ces accessoires permettent de créer des systèmes ou réseaux uniques adaptés à la zone de détection. Le réseau est alors modulable en fonction du besoin.

Un autre avantage de l'invention est de permettre à la centrale de savoir si des « boucles de capteurs linéaires » sont présentes dans le réseau via les dérivations ou de définir la fin d'une ligne de détection formée par une série de capteurs linéaires se terminant par un bouchon. La centrale est également configurée pour définir combien de capteurs linéaires constituent une boucle de capteurs linéaires au sein du réseau.

Le réseau est donc capable d'une « auto-découverte », ce qui simplifie grandement l'installation dudit réseau et le rend tolèrent aux changements de configuration qui peuvent être effectués en cours d'exploitation de manière imprévue ou non signalée.

Par exemple, en cas de problème avec un des capteurs linéaires, la centrale est capable d'identifier directement le capteur linéaire visé et d'en informer l'utilisateur pour effectuer directement une maintenance de celui-ci. Cela facilite le remplacement dudit capteur linéaire posant problème et permet d'optimiser la maintenance du réseau. Aucune manipulation ou test n'est nécessaire par l'utilisateur pour effectuer ladite maintenance grâce à l'identification de la centrale.

Avantageusement, la centrale est configurée pour mettre à jour les capteurs linéaires ainsi que les accessoires constituant le réseau.

L'au moins une réponse à la requête locale et l'au moins une réponse à la requête générale peuvent également comprendre des données spécifiques propres à chaque capteur linéaire et/ou accessoire.

Les données spécifiques peuvent comprendre au moins une des données suivantes :
- une date de mise en service du capteur linéaire,
- le type de capteur linéaire,
- une longueur du capteur linéaire,
- une résistance des boucles interne au capteur linéaire,
- un niveau de pollution,
- un état d'alarme,
- un niveau d'alimentation.

Les données spécifiques permettent de faire remonter à l'utilisateur des données propres à chaque capteur linéaire et/ou accessoire. Les données spécifiques sont avantageusement envoyées à la centrale sous forme de données brutes. Cela permet alors de traiter chacune des valeurs brutes reçues par la centrale selon les besoins ou caractéristiques du capteur linéaire ou d'un accessoire concerné sans avoir besoin de programmer ces choix à l'avance par l'utilisateur dans la centrale.

Grâce aux données spécifiques, la centrale peut avantageusement gérer l'organisation du réseau et par exemple définir de quel type de capteur linéaire il s'agit ou définir leur historique. Elle peut également définir de quel accessoire il s'agit. De plus les données spécifiques permettent de maintenir le bon fonctionnement du réseau mais permettent également de fiabiliser l'attribution géographique des réponses reçues par la centrale.

Dans un mode de réalisation préféré, une requête générale est envoyée afin de faire remonter à la centrale chaque identifiant unique ainsi qu'une ou plusieurs données spécifiques en même temps.

Avantageusement, plusieurs requêtes générales peuvent être envoyées par la centrale. En effet, la centrale envoie les requêtes générales en fonction des réponses dont celle-ci a besoin. En fonction du type de requête générale envoyée, les réponses que la centrale reçoit sont adaptées. En fonction du type de requête générale envoyée, une requête générale peut alors contenir une donnée spécifique ou plusieurs données spécifiques en réponse à celle-ci. Par exemple, lors de l'envoi de la première requête générale à travers le réseau, la centrale reçoit l'identifiant unique de chaque élément du réseau, dans ce cas une seule donnée est recueillie. On entend par « première requête générale », la requête générale envoyée dans un premier temps pour « scanner » le réseau. Cela permet à la centrale de constituer la base topologique du réseau. Grâce à la liste d'identifiant unique qu'elle constitue via les réponses reçues, elle peut ensuite enrichir l'architecture de cette topologie de base en s'adressant directement à chaque élément. En effet, avec l'envoi d'une deuxième requête générale, la centrale peut alors « organiser » l'architecture, par exemple en recevant en réponse à ladite deuxième requête générale le type de l'élément qui répond et/ou quel élément est connecté audit élément qui répond. Dans ce cas-là, la réponse à la requête générale peut comprendre plusieurs données spécifiques. La reconstruction de la topologie du réseau et son organisation par la centrale dépend donc des différentes réponses reçues par la centrale en réponse aux requêtes générales envoyées.

Avantageusement, en fonction des données spécifiques envoyées à la centrale, la centrale peut configurer un niveau de sensibilité du réseau. Le niveau de sensibilité peut être réglé globalement ou individuellement sur chaque élément.

Chaque capteur linéaire et/ou accessoire peut comprendre un module d'alimentation, et le procédé peut comprendre également les étapes suivantes
- si un niveau d'alimentation du module d'alimentation d'un capteur linéaire et/ou accessoire est inférieur à un seuil déterminé, une alerte est envoyée à la centrale.

L'avantage de déterminer le niveau d'alimentation d'un capteur linéaire et/ou d'un accessoire est de savoir si le niveau d'alimentation générale du réseau est stable et supérieur à un seuil déterminé au préalable. Lorsque le niveau d'alimentation devient inférieur au seuil prédéterminé, un état d'alerte est envoyé lors de la transmission de données spécifiques par le capteur linéaire visé vers la centrale. L'utilisateur peut alors déterminer s'il y a besoin d'ajouter une alimentation externe pour stabiliser le niveau d'alimentation du réseau. Dans un autre mode de réalisation, le capteur linéaire peut également envoyer un état d'alerte de lui-même, sans envoi de requête au préalable.

Le procédé peut également comprendre les étapes suivantes :
- identification du capteur linéaire en état d'alarme à partir des données spécifiques reçues par la centrale lors de la réponse à la requête générale.

Le procédé selon l'invention permet de localiser le capteur linéaire en état d'alarme. En effet, une fois que la centrale à identifier l'ensemble des éléments constituant le réseau, celle-ci est configurée pour identifier l'élément qui a fait remonter une donnée d'état d'alarme. Le fait de remonter cette donnée permet à l'utilisateur de définir où positionner les alimentations externes de la manière la plus optimale possible, c'est-à-dire en fonction de la position du capteur linéaire en état d'alarme.

L'au moins une requête locale peut être envoyée par chaque capteur linéaire et/ou accessoire périodiquement selon une période de temps T.

L'envoi de requête locale par les éléments du réseau peut avantageusement être périodique. Dans ce cas, lors d'un changement de capteur linéaire au cours d'une maintenance par exemple, les identifiants uniques ainsi que les données spécifiques sont automatiquement mises à jour à la prochaine période de temps T dans la centrale.

La centrale peut affecter un identifiant simplifié à chaque capteur linéaire et/ou accessoire en fonction de leur identifiant unique reçu.

Avantageusement, la centrale peut créer une table comprenant les identifiants uniques des éléments du réseau ainsi que les données spécifiques reçues propres à chaque élément du réseau. La centrale associe à chaque élément un numéro de registre selon un protocole « Modbus » ainsi qu'une adresse de registre « Modbus ». La centrale est configurée pour associer l'identifiant unique d'un élément du réseau à un identifiant simplifié ou « TAG » dans la table. Cela permet à l'utilisateur de trier ladite table en fonction de l'identifiant simplifié, ou encore en fonction de la position de l'élément dans le réseau ou par adresse de registre « modbus » par exemple.

Le numéro de registre associé à chaque élément par la centrale dans la table peut être proposé automatiquement mais peut aussi, avantageusement, être modifié par l'utilisateur avec des numéros de registre non utilisés dans la table. Ceci permet de modifier l'ordre des adresses modbus affectées à chaque élément du réseau sans avoir à reprogrammer la totalité de la table.

Suivant encore un autre aspect de l'invention, il est proposé un système pour la mise en oeuvre du procédé selon l'invention, le système comprenant une centrale et une pluralité de capteurs linéaires comprenant chacun une première extrémité et une deuxième extrémité et qui sont connectés entre eux pour former une ligne de détection, laquelle est connectée à ladite centrale par au moins une extrémité de ladite ligne de détection, le système comprenant également au moins un accessoire.

Suivant encore un autre aspect de l'invention, il est proposé un produit programme d'ordinateur comprenant des instructions qui, lorsque le programme est exécuté par un ordinateur, conduisent celui-ci à mettre en oeuvre les étapes du procédé selon l'invention.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
**[****Fig. 1****]** illustre un détecteur d'un capteur linéaire,
**[****Fig. 2****]** illustre un capteur linéaire,
**[****Fig. 3****]** illustre un schéma du procédé « d'auto-découverte » d'un réseau selon l'invention,
**[****Fig. 4****]** décrit un exemple de mode de réalisation selon l'invention.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

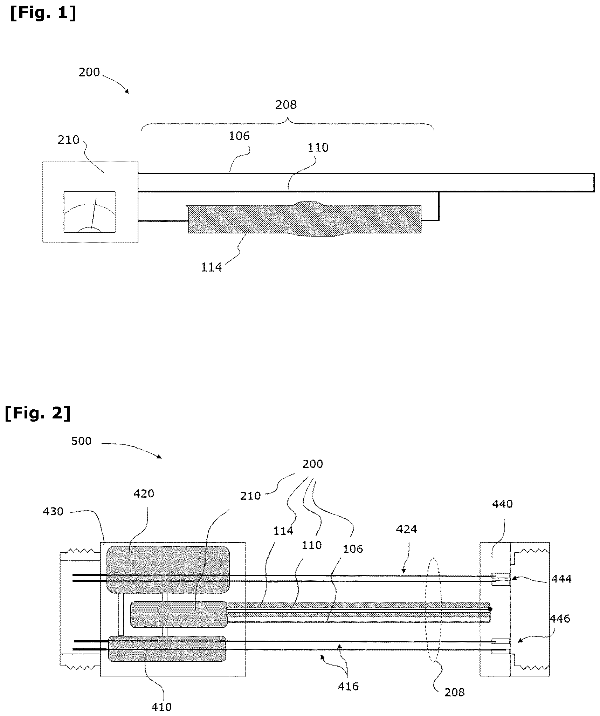

Les Fig.1 et Fig.2 illustrent un exemple de constitution d'un capteur linéaire utilisable dans le cadre de l'invention. Cependant, d'autres types de capteurs linéaires montés en série sont utilisables dans le cadre de l'invention, avec tous types de modes de détection, et tous de types de bus de communication et/ou d'alimentation. Des capteurs linéaires différents les uns des autres peuvent aussi être utilisés ensemble dans le cadre de l'invention, dès lors que leurs bus de communication sont compatibles entre eux et avec la centrale.

Dans cet exemple, chaque capteur linéaire 500 comprend un détecteur 200, illustré en Fig.1. Ce détecteur 200 comprend un module de gestion 210, qui est connecté à l'extrémité proximale d'un membre de détection 208 allongé sur toute la longueur du capteur linéaire 500. Ce membre de détection 208 forme un faisceau qui comprend deux conducteurs métalliques 106 et 110 et deux conducteurs de détection 114, qui sont électriquement connectés deux à deux. Le module de gestion 210 mesure les propriétés électriques des conducteurs de détection 114 grâce à l'un des conducteurs métalliques 106 et 110, dit fil de retour de mesure. Pour une détection d'un liquide conducteur comme par exemple une détection eau/acide base, la résistivité du membre de détection diminue lors d'un contact avec ledit liquide. Pour une détection d'un liquide non conducteur de type hydrocarbure ou solvant par exemple, la résistivité du membre de détection augmente lors d'un contact avec ledit liquide.

Comme illustré en Fig.2, en plus de l'élément détecteur 200, le capteur linéaire 500 comprend un élément de communication qui inclut d'une part deux conducteurs de communication 416 et deux conducteurs d'alimentation 424 courant sur toute la longueur du capteur linéaire 500. A l'extrémité proximale du capteur linéaire 500, un connecteur 430 renferme le module de gestion 210. Le connecteur 430 comprend également un module de communication 410 et un module d'alimentation 420, qui sont connectés aux conducteurs de communication 416 et d'alimentation 424 et forment avec eux un bus de communication alimenté.

Chaque capteur linéaire 500 porte à son extrémité distale un connecteur 440. Le connecteur 440 comprend des ports de connexion 444 et 446 qui permettent de connecter l'extrémité distale de ses conducteurs d'alimentation 424 et respectivement de communication 416 à l'extrémité proximale d'un autre capteur linaire du même type.

Les positions des connecteurs 430 et 440 ne sont pas limitatives. Dans certains modes de réalisation, le connecteur 440 est positionné sur l'extrémité proximale du capteur linéaire 500 et le connecteur 430 sur l'extrémité distale du capteur linéaire 500 par exemple.

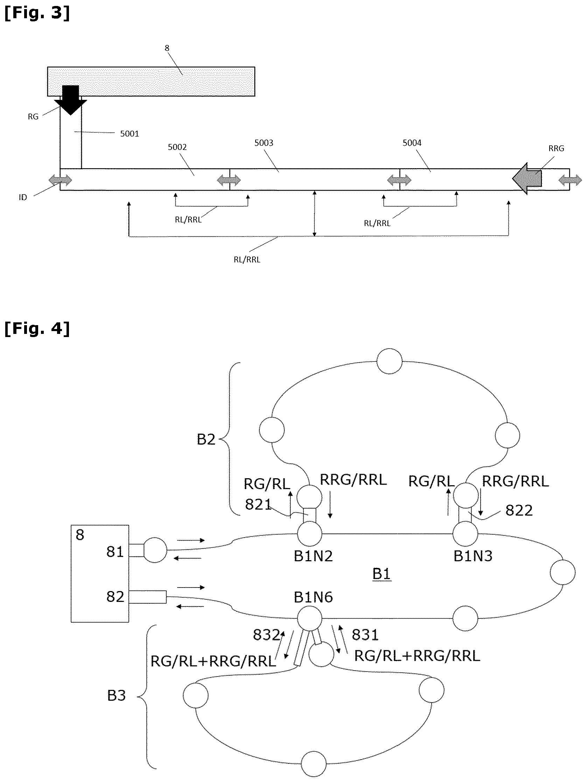

En référence à la figure 3, nous allons maintenant décrire le procédé « d'auto-découverte » d'un réseau selon l'invention.

Le système ou réseau présenté se compose d'une centrale 8 et de quatre capteurs linéaires 5001 à 5004 branchés en série et connectés à la centrale 8 par une des extrémités du capteur linéaire 5001. Le nombre de capteurs linéaires est donné à titre indicatif et n'est par conséquent pas limitatif. La série de capteurs linéaires forme une ligne de détection non bouclée et fermée. Elle est fermée par un bouchon.

Lorsque le système démarre, chaque élément du réseau, c'est-à-dire les capteurs linéaires et le bouchon dans cet exemple, vont automatiquement envoyer une requête locale RL aux éléments se situant en amont et/ou en aval. L'envoi des requêtes locales RL se fait de manière autonome au démarrage. On entend par « autonome », le fait que les requêtes locales soient envoyées sans requête générale de la centrale au préalable. Les différents éléments peuvent envoyées les requêtes locales les uns après les autres ou par tronçon de réseau ou alors tous en même temps par exemple.

En effet, dans un premier temps et dans l'exemple présenté, le capteur linéaire 5001 identifie le capteur linéaire 5002 en aval, le capteur linéaire 5002 identifie le capteur linéaire 5001 en amont et le capteur linéaire 5003 en aval, le capteur linéaire 5003 identifie le capteur linéaire 5002 en amont et le capteur linéaire 5004 en aval et enfin le capteur linéaire 5004 identifie le capteur linéaire 5003 en amont (référence ID sur la figure2).

Dans un deuxième temps, chaque capteur linéaire 5001 à 5004 envoie une requête local RL aux capteurs linéaires qu'ils ont chacun identifié via les deux conducteurs de communication de chaque capteur linéaire. Le capteur linéaire 5001 envoie une requête local RL au capteur linéaire 5002, le capteur linéaire 5002 envoie une requête locale RL aux capteurs linéaires 5001 et 5003, le capteur linéaire 5003 envoie une requête locale RL aux capteurs linéaires 5002 et 5004, et enfin le capteur linéaire 5004 envoie une requête locale RL au capteur linéaire 5003.

Les requêtes locales RL sont donc envoyées sous forme de signal d'interrogation. Les requêtes locales RL reçues sont traitées par le module de gestion 210 de chaque capteur linéaire 5001 à 5004. L'ensemble des capteurs linéaires 5001 à 5004 traitent la requête locale RL qu'ils ont reçues et y répondent (référence RRL). Les différents éléments peuvent répondre aux requêtes locales les uns après les autres ou par tronçon de réseau ou alors tous en même temps par exemple.

Chaque détecteur 200 interne à chaque capteur linéaire comprend un identifiant unique qui permet de l'identifier. L'identifiant unique correspond au numéro de série du détecteur 200 de chaque capteur linéaire par exemple. Lorsqu'un capteur linéaire répond à une requête locale RRL, celui-ci communique son identifiant unique au capteur linéaire qui a envoyé la requête locale RL. Par exemple, le capteur linéaire 5001 envoie en réponse à la requête locale RRL du capteur linéaire 5002 son identifiant unique, le capteur linéaire 5002 envoie son identifiant unique en réponse aux capteurs linéaires 5001 et 5003, le capteur linéaire 5003 envoie son identifiant unique en réponse aux capteurs linéaires 5002 et 5004 et enfin le capteur 5004 envoie son identifiant unique en réponse au capteur linéaire 5003.

Dans un mode de réalisation préféré, la centrale 8 envoie une requête générale RG à l'ensemble des capteurs linéaires 5001 à 5004 ainsi qu'au bouchon afin de d'obtenir l'ensemble des identifiants uniques qui composent le réseau ainsi que les identifiants uniques identifiés par les différents éléments du réseau, c'est-à-dire les éléments qui se trouvent en amont/aval des éléments et/ou qui sont connectés aux différents éléments. Cette requête générale RG va permettre à la centrale de reconstituer l'architecture du réseau ou système.

La requête générale RG est reçue par chaque module de communication de chaque capteur linéaire 5001 à 5004. La requête générale RG est traitée par le module de gestion 210 de chaque capteur linéaire. La requête générale RG est transmise sous forme de signal d'interrogation par la centrale 8 aux différents capteurs linéaires. Le nombre de requêtes générales n'est pas limité.

La centrale 8 envoie une requête générale RG à l'ensemble des capteurs linéaires 5001 à 5004 ainsi qu'au bouchon. En réponse à la requête générale RG envoyée par la centrale 8, chaque élément du réseau envoie son identifiant unique ainsi que l'identifiant unique des éléments se trouvant en amont/aval de celui-ci obtenus grâce aux différentes requêtes locales RL envoyées lors du démarrage su système.

Par conséquent, chaque capteur linéaire transmet à la centrale 8 son identifiant unique (réponse à la première requête générale RRG) ainsi que les identifiants uniques des capteurs linéaires qu'ils ont identifiés (réponse à la deuxième requête générale RRG). Par exemple, dans le cas présenté, pour répondre à la requête générale RRG, le capteur linéaire 5001 envoie à la centrale son identifiant unique ainsi que celui du capteur linéaire 5002, le capteur linéaire 5002 envoie à la centrale 8 son identifiant unique et les identifiants uniques des capteurs linéaires 5001 et 5003, le capteur linéaire 5003 envoie à la centrale son identifiant unique ainsi que les identifiants uniques des capteurs linéaires 5002 et 5004, et enfin le capteur linéaire 5004 envoie à la centrale 8 son identifiant unique ainsi que celui du capteur linéaire 5003. Les réponses à la requête générale RRG sont transmises sous forme de signal de réponse à la centrale 8.

Dans ce mode de réalisation préféré, la requête générale RG envoyée permet également de faire remonter à la centrale 8 des données spécifiques propres aux éléments du réseau. Dans ce cas, chaque élément du réseau envoie une nouvelle requête locale aux éléments en amont et/ou en aval. La réponse à la requête locale RRL de chaque capteur linéaire ou accessoire comme le bouchon comprend alors les données spécifiques demandées par la requête générale RG qui sont propres aux différents éléments du réseau. Les réponses aux différentes requêtes locales peuvent comprendre une ou plusieurs données spécifiques. Les données spécifiques sont par exemple :
- une date de mise en service du capteur linéaire,
- le type de capteur linéaire,
- une longueur du capteur linéaire,
- une résistance de boucle interne au capteur linéaire,
- un niveau de pollution,
- un état d'alarme,
- un niveau d'alimentation.

Les données spécifiques ne sont pas limitées à cette liste. Les données spécifiques sont dans d'autres mode de réalisation des données historiques, ou de sensibilité par exemple.

Chaque capteur linéaire comprend une date de mise en service. Cette donnée spécifique est stockée dans le module de gestion 210 dudit capteur linéaire par exemple. Il en est de même pour le type de capteur linéaire et la longueur de celui-ci. Ces données spécifiques sont donc transmises à la centrale 8 lors des étapes de réponses à une requête locale RRL ou lors d'une réponse à une requête générale RRG.

On entend par « boucle interne au capteur linéaire » dans l'expression résistance de boucle interne au capteur linéaire, une boucle formée par un des conducteurs métalliques et un fil de retour de mesure dans un capteur linéaire (références 106 et 110 sur figure 1). La résistance d'une boucle interne correspond donc à l'état dans laquelle celle-ci se trouve. Dans le cas où, par exemple, le conducteur métallique ou le fil de retour est coupé, endommagé, ou que pour toute autre raison la boucle interne n'est plus fonctionnelle, un état d'alarme du capteur linéaire correspondant à une alarme de discontinuité est envoyé à la centrale 8 pour prévenir l'utilisateur.

Les conducteurs de détections 114 comprennent une résistance (non représentée sur les figures) qui permet de définir si une rupture du membre de détection 208 est apparue. On entend par « un niveau de pollution », le niveau de pollution de ladite résistance des conducteurs de détection 114. En effet, au cours de l'utilisation d'un capteur linéaire, de la poussière peut se déposer sur la résistance, par exemple, ou la résistance peut se dégrader suite aux conditions environnementales dans lesquelles elle se trouve. Dans ce cas, un état d'alerte du capteur linéaire correspondant à une alerte de nettoyage est envoyé à la centrale 8 pour prévenir l'utilisateur par exemple.

Un état d'alarme est envoyé si une des conditions précédemment décrites se produit. L'état d'alarme est également activé en fonction d'un niveau de sensibilité du réseau. En effet, ce niveau de sensibilité est défini en fonction des données spécifiques de pollution et/ou de résistance des boucles internes envoyées à la centrale. Pour cela, un seuil de sensibilité est défini au préalable pour chaque capteur linéaire ou pour le réseau en fonction du besoin. Par exemple, le seuil de sensibilité est réglé entre un et cinq s'il s'agit d'un seuil de sensibilité individuel, soit propre à chaque capteur linéaire ou à zéro s'il s'agit d'un seuil de sensibilité globale du réseau.

Dans le cas où une rupture ou une défaillance se produit sur l'un des capteurs linéaires, celui-ci se met en état d'alarme. Le module de gestion dudit capteur linéaire en état d'alarme transmet alors à la centrale cette donnée spécifique en réponse à la requête générale RRG ou sur requête locale RRL d'un capteur linéaire.

Le niveau d'alimentation d'un capteur linéaire est défini par le module d'alimentation 420. Les deux conducteurs d'alimentation 424 sont chargés de transmettre l'alimentation à travers le réseau. Cependant, la portée de l'alimentation est limitée à une certaine distance de capteurs linéaires, c'est à dire une certaine longueur de câbles. Par conséquent, le niveau d'alimentation de chaque capteur linéaire est transmis lorsqu'une requête générale RG est envoyée par la centrale et/ou lorsqu'une requête locale RL est envoyée pas l'un des capteurs linéaires. Dans un mode de réalisation, cette donnée spécifique est envoyée sur demande à la centrale ou à un élément du réseau. Dans un autre mode de réalisation, cette donnée spécifique peut être également envoyée à la centrale par l'élément, de lui-même, sans requête au préalable.

Dans le cas où la centrale 8 identifie un capteur linéaire possédant un niveau d'alimentation trop faible, c'est-à-dire en dessous d'un seuil prédéterminé un état d'alerte est envoyé par le module de gestion 210 du capteur linéaire en question à la centrale 8. La centrale 8 envoie alors un message à la centrale pour que l'utilisateur puisse intervenir sur le réseau. Par exemple, si l'alimentation du réseau est égale à douze volts, le seuil prédéterminé peut se trouver à environ dix volts - dix volts et demi. La centrale peut aussi signaler à l'utilisateur qu'il y a trop d'éléments sur la boucle. L'utilisateur peut alors intervenir et supprimer des éléments ou ajouter une alimentation externe si cela est possible.

Dans un mode de réalisation, l'ensemble des données spécifiques sont envoyées sur demande à la centrale ou à un élément du réseau. Dans un autre mode de réalisation, l'ensemble des données spécifiques peuvent être également envoyées à la centrale par l'élément, de lui-même, sans requête au préalable.

Quand toutes les réponses aux requêtes locales RRL ont été envoyées et traitées par les capteurs linéaires, chaque capteur linéaire 5001 à 5004 répond à la requête générale RRG envoyée par la centrale 8 (référencé RRG) dans le sens bouchon-centrale.

Dans le mode de réalisation préféré présenté ici, une seule requête générale RG est envoyée par la centrale 8 afin de recevoir les identifiants uniques de chaque élément du réseau ainsi que des données spécifiques permettant à la centrale 8 de connaitre par exemple le type d'élément qui forme le réseau, ou l'état dans lequel il se trouve.

Dans un second mode de réalisation, la centrale 8 envoie deux requêtes générales RG distinctes afin de faire remonter d'une part les identifiants uniques de chaque élément et d'autre part les données spécifiques propre à chaque élément.

Dans un premier temps, lors du démarrage du réseau, la centrale 8 envoie une première requête générale RG à l'ensemble des capteurs linéaires 5001 à 5004 afin de d'obtenir l'ensemble des identifiants uniques compris dans chaque élément qui composent le réseau ainsi que les identifiants uniques identifiés par les différents éléments du réseau, c'est-à-dire les éléments qui se trouvent en amont/aval des éléments et/ou qui sont connectés aux différents éléments. Suite à cette première requête générale RG, chaque élément du réseau, c'est-à-dire les capteurs linéaires et le bouchon dans cet exemple, vont envoyer une requête locale RL aux éléments se situant en amont et/ou en aval. Dans ce mode de réalisation, l'envoi des requêtes locales par les éléments du réseau ne se fait pas de manière autonome mais sur demande. Sur le même principe que présenté dans le mode de réalisation préféré, l'ensemble des éléments du réseau répond aux différentes requêtes locales RL envoyée. Une fois l'ensemble des requêtes locales RL traitées, les éléments du réseau répondent à la première requête générale RG toujours selon le même principe que celui présenté dans le mode de réalisation préféré.

Dans un deuxième temps et si besoin, la centrale envoie une deuxième requête générale RG afin d'obtenir les différentes données spécifiques propres à chaque élément du réseau. Les données spécifiques sont les mêmes que celles présentées dans le mode de réalisation préféré. L'envoi de la deuxième requête fonctionne sur le même principe que l'envoi d'une seule requête générale RG comme présenté dans le mode de réalisation préféré.
La centrale 8 reçoit alors l'ensemble des réponses des requêtes générales RRG (la première ainsi que la deuxième), et les traite. Les réponses aux requêtes générales sont donc adaptées au type de requête générale envoyées.

Quel que soit le mode de réalisation, la centrale 8 récupère l'intégralité des données spécifiques envoyées par les capteurs linéaires du réseau via la ou les différentes requêtes générales RG et créer une table afin de les organiser. Les identifiants uniques de chaque capteur linéaire sont stockés dans ladite table. Un numéro de registre modbus est ensuite attribué automatiquement à chaque capteur linéaire dans la table ainsi qu'une adresse de registre.

Quel que soit le mode de réalisation encore, la au moins une requête locale RL peut être envoyée à intervalle régulier. La au moins une requête locale est alors envoyée selon une période de temps et non à la demande de la centrale 8.

En Fig.4 est illustré un exemple de mode de réalisation de l'invention. Dans cet exemple, les différentes requêtes correspondent à des signaux d'interrogation. Les différentes réponses aux différentes requêtes correspondent à des signaux de réponse.

Le réseau se compose d'une centrale 8 comprenant deux connecteurs 81 et 82 connectés à une série de capteurs linéaires formant la boucle B1 via les connecteurs des capteurs linéaires situés aux extrémités de ladite série. La boucle B1 comprend des dérivations B1N2, B1N3 et B1N6, qui reçoivent deux séries de capteurs linéaires formant les boucles secondaires B2 et B3.

Ces dérivations B1N2, B1N3 et B1N6 sont formées par un module électronique de dérivation, qui est agencé pour recevoir dans au moins une de ses sorties, le connecteur d'un ou plusieurs capteurs linéaires, potentiellement du même type mais pas obligatoirement.

Dans cet exemple, chacune de ces dérivations sont situées au niveau de l'un des connecteurs d'un capteur linéaire. Le connecteur 4302 contient ainsi une dérivation B1N2, le connecteur 4303 contient une dérivation B1N3, et le connecteur 4306 contient une dérivation B1N6.

Au sein d'un capteur linéaire, chacune des dérivations est fonctionnellement connectée au module de communication 410 du capteur linéaire, qui lui transmet les signaux d'interrogation E1, E2 des différentes requêtes générales et locales RG, RL qu'il reçoit, en plus de les transmettre au capteur linéaire adjacent. La dérivation est agencée pour transmettre le signal d'interrogation vers un capteur linéaire dérivé par l'intermédiaire d'une boite de dérivation.

Ainsi, la boucle B1 (dite primaire, ou de rang 1) porte une dérivation dite simple B1N2, muni d'une première boite de dérivation 821 sur laquelle est connectée l'une des extrémités d'une boucle secondaire B2 (ou de rang 2).

La boucle B1 (dite primaire, ou de rang 1) porte une deuxième dérivation dite simple B1N3, muni d'une première boite de dérivation 822 sur laquelle est connectée l'une des extrémités de la boucle secondaire B2 (ou de rang 2).

Par cette boite de dérivation 821, la dérivation B1N2 répercute sous la forme de premiers signaux d'interrogation E21 dans la boucle B2, les premiers signaux d'interrogation E1 reçus dans le connecteur 4302 envoyés par le port d'interrogation 81 à travers les capteurs linéaires de la boucle B1. La dérivation B1N2 est aussi agencée pour recevoir par sa boite de dérivation 821 les signaux de réponse R21 envoyés par les capteurs linéaires de la boucle B2 en réponse aux signaux d'interrogation E21, et les répercuter dans la boucle primaire B1 sous la forme de signaux de réponse R1. Les signaux de réponse R21 sont transmis au port d'interrogation 81 de la centrale qui a émis les signaux d'interrogation via les capteurs linéaires de la boucle B1.

Par cette boite de dérivation 822, la dérivation B1N3 répercute sous la forme de premiers signaux d'interrogation E22 dans la boucle B2, les premiers signaux d'interrogation E2 reçus dans le connecteur 4303 envoyés par le port d'interrogation 82 via les capteurs linéaires de la boucle B1. La dérivation B1N3 est aussi agencée pour recevoir par sa boite de dérivation 822 les signaux de réponse R22 envoyés par les capteurs linéaires de la boucle B2 en réponse aux signaux d'interrogation E22, et les répercuter dans la boucle primaire B1 sous la forme de signaux de réponse R2. Les signaux de réponse R22 sont transmis au port d'interrogation 82 de la centrale qui a émis les signaux d'interrogation via les capteurs linéaires de la boucle B1.

La boucle B1 (dite primaire, ou de rang 1) porte également une troisième dérivation dite double B1N6, muni de deux boites de dérivation 831 et 832 sur lesquelles sont connectées les extrémités de la boucle secondaire B3 (ou de rang 2). Cette dernière fonctionne de la même façon que les dérivations simples, à la différence qu'elle réunit et gère à la fois une première boite de dérivation 831 et une deuxième boite de dérivation 832 sur lesquelles sont connectées les deux extrémités d'une deuxième boucle secondaire B3 (elle-même aussi de rang deux). Chacune de ces boites de dérivation 831, 832 lui transmette des premiers et deuxièmes signaux d'interrogation E31 et E32, et en reçoit des premiers et deuxièmes signaux de réponse R31 et R32.

Comme on le comprend, les premières et deuxièmes boites de dérivation de ladite dérivation B1N6 de la boucle B1 sont vues par les boucles B2, B3 de façon similaire aux ports d'interrogation 81, 82 de la centrale 8.

La dérivation B1N6 est donc agencée pour recevoir par sa boite de dérivation 831 les signaux de réponse R31 envoyés par les capteurs linéaires de la boucle B3 en réponse aux signaux d'interrogation E31, et les répercuter dans la boucle primaire B1 sous la forme de signaux de réponse R1 via les capteurs linéaires de la boucle B1. Les signaux de réponse R31 sont transmis au port d'interrogation 81 de la centrale qui a émis les signaux d'interrogation.

La dérivation B1N6 est également agencée pour recevoir par sa boite de dérivation 822 les signaux de réponse R32 envoyés par les capteurs linéaires de la boucle B3 en réponse aux signaux d'interrogation E32 via les capteurs linéaires de la boucle B3, et les répercuter dans la boucle primaire B1 sous la forme de signaux de réponse R1 via les capteurs linéaires de la boucle B1. Les signaux de réponse R32 sont transmis au port d'interrogation 82 de la centrale qui a émis les signaux d'interrogation.

A partir des signaux de réponse reçus des capteurs linéaires, dérivations et/ou accessoires (non compris dans le mode de réalisation décrit), la centrale 8 initie une fonction de « découverte » du réseau.

On voit qu'il est ainsi possible de réaliser de nombreuses topologies, combinant des boucles de différents rangs, de façon très souple, aussi bien vis-à-vis des zones à surveiller que du point de vue des modifications d'installation en cours de vie. Ces avantages sont obtenus tout en bénéficiant de la redondance et de la localisation de défaillance que permet le fonctionnement individuel de chaque boucle, dont toutes les informations remontent finalement à la centrale 8.

Ce mode de réalisation est donné à titre d'exemple, de nombreux modes de réalisation sont possibles comme par exemple, un réseau tel que présenté à la figure 4 comprenant également des boucles de niveau trois, c'est-à-dire une boucle B4 sur une dérivation positionnée sur la boucle B3, et/ou, une ligne de capteurs linéaires fermée, c'est-à-dire qui ne forme pas une boucle, une première extrémité de la ligne étant connectée à la centrale 8 ou à une dérivation par exemple, la deuxième extrémité de la ligne se terminant par « un bouchon ».

Typiquement, chacun des moyens du dispositif selon l'invention précédemment décrits peuvent comprendre au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Procédé d'auto découverte d'un réseau de capteurs linéaires, le réseau comprenant une centrale (8) et une pluralité de capteurs linéaires (5001 à 5004) comprenant chacun une première extrémité (430) et une deuxième extrémité (440) et qui sont connectés entre eux pour former une ligne de détection, laquelle est connectée à ladite centrale (8) par au moins une extrémité de ladite ligne de détection, le réseau comprenant également au moins un accessoire, ledit accessoire comprenant au moins une sortie permettant de connecter un capteur linéaire via une des extrémités dudit capteur linéaire,
chaque capteur linéaire (5001 à 5004) et/ou accessoire étant **caractérisé par** un identifiant unique, le procédé comprenant au moins les étapes suivantes :
- pour chaque capteur linéaire (5001 à 5004) et/ou accessoire :
• identification (ID) d'au moins un capteur linéaire (5001 à 5004) situé en amont et/ou en aval du capteur linéaire et/ou de l'accessoire, l'au moins un capteur linéaire en amont et/ou en aval étant considéré comme identifié si l'une de ses extrémités (430 ou 440) est connecté à une des extrémités (430 ou 440) dudit capteur linéaire et/ou à l'au moins une sortie de l'accessoire,
• envoi d'au moins une requête locale (RL) à l'au moins un capteur linéaire identifié par ledit capteur linéaire (5001 à 5004) et/ou par l'accessoire,
• envoi d'au moins une requête générale (RG) par la centrale (8) à la pluralité de capteurs linéaires (5001 à 5004) et/ou d'accessoires du réseau,
• réception d'au moins une réponse à l'au moins une requête locale (RRL) par ledit capteur linéaire (5001 à 5004) et/ou l'accessoire, la réponse (RRL) étant composée de l'identifiant unique de l'au moins un capteur linéaire identifié par ledit capteur linéaire (5001 à 5004) et/ou l'accessoire,
• envoi d'au moins une réponse à la requête générale (RRG) par ledit capteur linéaire (5001 à 5004) et/ou par l'accessoire, la réponse à l'au moins une requête générale envoyée par le capteur linéaire comprenant l'identifiant unique de l'au moins un capteur linéaire identifié par ledit capteur linéaire ainsi que l'identifiant unique dudit capteur linéaire (5001 à 5004) , et/ou, la réponse à l'au moins une requête générale envoyée par l'accessoire comprenant l'identifiant unique de l'au moins un capteur linéaire identifié par ledit accessoire ainsi que l'identifiant unique dudit accessoire,
- traitement de l'au moins une réponse à la requête générale (RRG) reçue de chaque capteur linéaire et/ou de chaque accessoire par la centrale (8) permettant de reconstituer la topologie logique du réseau en fonction des identifiants uniques reçus.

2. Procédé d'auto découverte selon la revendication 1, **caractérisé en ce que** l'accessoire correspond à une dérivation et/ou un bouchon et/ou un câble neutre.

3. Procédé d'auto découverte selon l'une quelconque des revendications précédentes, **caractérisé en ce que** l'au moins une réponse à la requête locale (RRL) et l'au moins une réponse à la requête générale (RRG) comprennent également des données spécifiques propres à chaque capteur linéaire (5001 à 5004) et/ou accessoire.

4. Procédé d'auto découverte selon la revendication 3, **caractérisé en ce que** les données spécifiques comprennent au moins une des données suivantes :
- une date de mise en service du capteur linéaire,
- le type de capteur linéaire,
- une longueur du capteur linéaire,
- une résistance des boucles interne au capteur linéaire,
- un niveau de pollution,
- un état d'alarme,
- un niveau d'alimentation.

5. Procédé d'auto découverte selon l'une quelconque des revendications précédentes, **caractérisé en ce que** chaque capteur linéaire (5001 à 5004) et/ou accessoire comprend un module d'alimentation (420), et **caractérisé en ce que** le procédé comprend également les étapes suivantes :
- si un niveau d'alimentation du module d'alimentation (420) d'un capteur linéaire (5001 à 5004) et/ou d'un accessoire est inférieur à un seuil déterminé, une alerte est envoyée à la centrale (8).

6. Procédé d'auto découverte selon les revendications 3 à 5, **caractérisé en ce que** le procédé comprend également les étapes suivantes :
- identification du capteur linéaire (5001 à 5004) en état d'alarme à partir des données spécifiques reçues par la centrale (8) lors de la réponse à la requête générale (RRG).

7. Procédé d'auto découverte selon l'une quelconque des revendications précédentes, **caractérisé en ce que** l'au moins une requête locale (RL) est envoyée par chaque capteur linéaire (5001 à 5004) et/ou accessoire périodiquement selon une période de temps T.

8. Procédé d'auto découverte selon l'une quelconque des revendications précédentes, **caractérisé en ce que** la centrale (8) affecte un identifiant simplifié à chaque capteur linéaire (5001 à 5004) et/ou accessoire en fonction de leur identifiant unique reçu.

9. Système pour la mise en oeuvre du procédé selon les revendications précédentes 1 à 8, le système comprenant une centrale (8) et une pluralité de capteurs linéaires (5001 à 5004) comprenant chacun une première extrémité (430) et une deuxième extrémité (440) et qui sont connectés entre eux pour former une ligne de détection, laquelle est connectée à ladite centrale (8) par au moins une extrémité de ladite ligne de détection, le système comprenant également au moins un accessoire.

10. Produit programme d'ordinateur comprenant des instructions qui, lorsque le programme est exécuté par un ordinateur, conduisent celui-ci à mettre en oeuvre les étapes du procédé selon l'une quelconque des revendications 1 à 8.

## Patentansprüche

1. Verfahren für eine Selbsterkennung eines Netzwerks von linearen Sensoren, das Netzwerk umfassend eine Zentrale (8) und eine Vielzahl von linearen Sensoren (5001 bis 5004), umfassend jeweils ein erstes Ende (430) und ein zweites Ende (440) und die zum Ausbilden einer Erfassungsleitung miteinander verbunden sind, die durch mindestens ein Ende der Erfassungsleitung mit der Zentrale (8) verbunden ist, das Netzwerk umfassend ferner mindestens ein Zubehörteil, das Zubehörteil umfassend mindestens einen Ausgang, der es ermöglicht, einen linearen Sensor über eines der Enden des linearen Sensors zu verbinden, wobei jeder lineare Sensor (5001 bis 5004) und/oder jedes Zubehörteil **gekennzeichnet ist durch** eine eindeutige Kennung, das Verfahren umfassend mindestens die folgenden Schritte:
- für jeden linearen Sensor (5001 bis 5004) und/oder jedes Zubehörteil:
• Identifizieren (ID) von mindestens einem linearen Sensor (5001 bis 5004), der sich stromaufwärts und/oder stromabwärts des linearen Sensors und/oder des Zubehörteils befindet, wobei der mindestens eine lineare Sensor stromaufwärts und/oder stromabwärts als identifiziert gilt, falls das eine seiner Enden (430 oder 440) mit einem der Enden (430 oder 440) des linearen Sensors und/oder mit dem mindestens einen Ausgang des Zubehörteils verbunden ist,
• Senden mindestens einer lokalen Anfrage (RL) an den mindestens einen linearen Sensor, der durch den linearen Sensor (5001 bis 5004) und/oder durch das Zubehörteil identifiziert wird,
• Senden mindestens einer allgemeinen Anfrage (RG) durch die Zentrale (8) an die Vielzahl von linearen Sensoren (5001 bis 5004) und/oder von Zubehörteilen des Netzwerks,
• Empfangen mindestens einer Antwort auf die mindestens eine lokale Anfrage (RRL) durch den linearen Sensor (5001 bis 5004) und/oder das Zubehörteil, wobei die Antwort (RRL) aus der eindeutigen Kennung des mindestens einen linearen Sensors besteht, der durch den linearen Sensor (5001 bis 5004) und/oder das Zubehörteil identifiziert wird,
• Senden mindestens einer Antwort auf die allgemeine Anfrage (RRG) durch den linearen Sensor (5001 bis 5004) und/oder durch das Zubehörteil, die Antwort auf die mindestens eine allgemeine Anfrage, die durch den linearen Sensor gesendet wird, umfassend die eindeutige Kennung des mindestens einen linearen Sensors, der durch den linearen Sensor identifiziert wird, sowie die eindeutige Kennung des linearen Sensors (5001 bis 5004), und/oder die Antwort auf die mindestens eine allgemeine Anfrage, die durch das Zubehörteil gesendet wird, umfassend die eindeutige Kennung des mindestens einen linearen Sensors, der durch das Zubehörteil identifiziert wird, sowie die eindeutige Kennung des Zubehörteils,
- Verarbeiten der mindestens einen Antwort auf die allgemeine Anfrage (RRG), die von jedem linearen Sensor und/oder jedem Zubehörteil durch die Zentrale (8) empfangen wird, wodurch ermöglicht wird, dass die logische Topologie des Netzwerks in Abhängigkeit von den empfangenen eindeutigen Kennungen wiederhergestellt wird.

2. Selbsterkennungsverfahren nach Anspruch 1,
**dadurch gekennzeichnet, dass** das Zubehörteil einer Abzweigleitung und/oder einem Stopfen und/oder einem Neutralleiter entspricht.

3. Selbsterkennungsverfahren nach einem der vorstehenden Ansprüche, **dadurch gekennzeichnet, dass** die mindestens eine Antwort auf die lokale Anfrage (RRL) und die mindestens eine Antwort auf die allgemeine Anfrage (RRG) ferner spezifische Daten für jeden linearen Sensor (5001 bis 5004) und/oder jedes Zubehörteil umfassen.

4. Selbsterkennungsverfahren nach Anspruch 3,
**dadurch gekennzeichnet, dass** die spezifischen Daten mindestens eines der folgenden Daten umfassen:
- ein Datum einer Inbetriebnahme des linearen Sensors,
- die Art des linearen Sensors,
- eine Länge des linearen Sensors,
- einen Widerstand von Schleifen innerhalb des linearen Sensors,
- einen Verschmutzungsgrad,
- einen Alarmzustand,
- einen Leistungspegel.

5. Selbsterkennungsverfahren nach einem der vorstehenden Ansprüche, **dadurch gekennzeichnet, dass** jeder lineare Sensor (5001 bis 5004) und/oder jedes Zubehörteil ein Leistungsmodul (420) umfasst, und **dadurch gekennzeichnet, dass** das Verfahren ferner die folgenden Schritte umfasst:
- falls ein Leistungspegel des Leistungsmoduls (420) eines linearen Sensors (5001 bis 5004) und/oder eines Zubehörteils unter einem bestimmten Schwellenwert liegt, eine Warnung an die Zentrale (8) gesendet wird.

6. Selbsterkennungsverfahren nach den Ansprüchen 3 bis 5,
**dadurch gekennzeichnet, dass** das Verfahren ferner die folgenden Schritte umfasst:
- Identifizieren des linearen Sensors (5001 bis 5004) in einem Alarmzustand anhand der spezifischen Daten, die durch die Zentrale (8) während der Antwort auf die allgemeine Anfrage (RRG) empfangen werden.

7. Selbsterkennungsverfahren nach einem der vorstehenden Ansprüche, **dadurch gekennzeichnet, dass** die mindestens eine lokale Anfrage (RL) durch jeden linearen Sensor (5001 bis 5004) und/oder jedes Zubehörteil periodisch über eine Zeitperiode T gesendet wird.

8. Selbsterkennungsverfahren nach einem der vorstehenden Ansprüche, **dadurch gekennzeichnet, dass** die Zentrale (8) eine vereinfachte Kennung jedem linearen Sensor (5001 bis 5004) und/oder jedem Zubehörteil in Abhängigkeit von ihrer empfangenen eindeutigen Kennung zuweist.

9. System zum Implementieren des Verfahrens nach den vorstehenden Ansprüchen 1 bis 8, das System umfassend eine Zentrale (8) und eine Vielzahl von linearen Sensoren (5001 bis 5004), umfassend jeweils ein erstes Ende (430) und ein zweites Ende (440) und die zum Ausbilden einer Erfassungsleitung miteinander verbunden sind, die durch mindestens ein Ende der Erfassungsleitung mit der Zentrale (8) verbunden ist, das System umfassend ferner mindestens ein Zubehörteil.

10. Computerprogrammprodukt, umfassend Anweisungen, die, wenn das Programm durch einen Computer ausgeführt wird, diesen dazu veranlassen, die Schritte des Verfahrens nach einem der Ansprüche 1 bis 8 zu implementieren.

## Claims

1. Self-discovery method for a network of linear sensors, the network comprising a central processing unit (8) and a plurality of linear sensors (5001 to 5004) each comprising a first end (430) and a second end (440) and which are connected together to form a detection line, which is connected to said central processing unit (8) by at least one end of said detection line, the network also comprising at least one accessory, said accessory comprising at least one output allowing to connect a linear sensor by means of one of the ends of said linear sensor,
each linear sensor (5001 to 5004) and/or accessory being **characterized by** a unique identifier, the method comprising at least the following steps:
- for each linear sensor (5001 to 5004) and/or accessory:
• identifying (ID) at least one linear sensor (5001 to 5004) situated upstream and/or downstream of the linear sensor and/or of the accessory, the at least one upstream and/or downstream linear sensor being considered as identified if one of its ends (430 or 440) is connected to one of the ends (430 or 440) of said linear sensor and/or to the at least one output of the accessory,
• sending at least one local request (RL) to the at least one linear sensor identified by said linear sensor (5001 to 5004) and/or by the accessory,
• sending at least one general request (RG) by the central processing unit (8) to the plurality of linear sensors (5001 to 5004) and/or accessories of the network,
• receiving at least one response to the at least one local request (RRL) by said linear sensor (5001 to 5004) and/or the accessory, the response (RRL) being composed of the unique identifier of the at least one linear sensor identified by said linear sensor (5001 to 5004) and/or the accessory,
• sending at least one response to the general request (RRG) by said linear sensor (5001 to 5004) and/or by the accessory, the response to the at least one general request sent by the linear sensor comprising the unique identifier of the at least one linear sensor identified by said linear sensor as well as the unique identifier of said linear sensor (5001 to 5004), and/or, the response to the at least one general request sent by the accessory comprising the unique identifier of the at least one linear sensor identified by said accessory as well as the unique identifier of said accessory,
- processing the at least one response to the general request (RRG) received from each linear sensor and/or from each accessory by the central processing unit (8) allowing to reconstitute the logical topology of the network as a function of the unique identifiers received.

2. Self-discovery method according to claim 1, **characterized in that** the accessory corresponds to a junction block and/or an end stop and/or a neutral cable.

3. Self-discovery method according to any one of the preceding claims, **characterized in that** the at least one response to the local request (RRL) and the at least one response to the general request (RRG) also comprise specific data pertaining to each linear sensor (5001 to 5004) and/or accessory.

4. Self-discovery method according to claim 3, **characterized in that** the specific data comprise at least one of the following data items:
- a date of commissioning of the linear sensor,
- the type of linear sensor,
- a length of the linear sensor,
- a resistance of the loops internal to the linear sensor,
- a pollution level,
- an alarm state,
- a power supply level.

5. Self-discovery method according to any one of the preceding claims, **characterized in that** each linear sensor (5001 to 5004) and/or accessory comprises a power supply module (420), and **characterized in that** the method also comprises the following steps:
- if a power supply level of the power supply module (420) of a linear sensor (5001 to 5004) and/or of an accessory is below a determined threshold, an alert is sent to the central processing unit (8).

6. Self-discovery method according to claims 3 to 5, **characterized in that** the method also comprises the following steps:
- identifying the linear sensor (5001 to 5004) in alarm state on the basis of the specific data items sent by the central processing unit (8) during the response to the general request (RRG).

7. Self-discovery method according to any one of the preceding claims, **characterized in that** the at least one local request (RL) is sent by each linear sensor (5001 to 5004) and/or accessory periodically according to a time period T.

8. Self-discovery method according to any one of the preceding claims, **characterized in that** the central processing unit (8) allocates a simplified identifier to each linear sensor (5001 to 5004) and/or accessory as a function of their unique identifier received.

9. System for the implementation of the method according to the preceding claims 1 to 8, the system comprising a central processing unit (8) and a plurality of linear sensors (5001 to 5004) each comprising a first end (430) and a second end (440) and which are connected together to form a detection line, which is connected to said central processing unit (8) by at least one end of said detection line, the system also comprising at least one accessory.

10. Computer program product comprising instructions which, when the program is executed by a computer, cause the latter to implement the steps of the method according to any one of claims 1 to 8.
